(19) **Europäisches Patentamt / European Patent Office / Office européen des brevets**

(11) **EP 1 515 033 B1**

(12) **EUROPEAN PATENT SPECIFICATION**

(45) Date of publication and mention
of the grant of the patent:
**18.08.2010 Bulletin 2010/33**

(51) Int Cl.:
*F02D 41/30* (2006.01)

(21) Application number: **04020468.7**

(22) Date of filing: **27.08.2004**

(54) **Fuel injection control apparatus for diesel engine**

Kraftstoffeinspritzungssteuergerät für einen Dieselmotor

Appareil de commande de l'injection de carburant pour moteur diesel

(84) Designated Contracting States:
**DE ES FR GB IT**

(30) Priority: **12.09.2003 JP 2003321409**

(43) Date of publication of application:
**16.03.2005 Bulletin 2005/11**

(73) Proprietor: **Toyota Jidosha Kabushiki Kaisha
Toyota-shi, Aichi-ken, 471-8571 (JP)**

(72) Inventors:
- **Ito, Takekazu
  Toyota-shi
  Aichi-ken 471-8571 (JP)**
- **Sugiyama, Tatsumasa
  Toyota-shi
  Aichi-ken 471-8571 (JP)**

(74) Representative: **Kuhnen & Wacker
Patent- und Rechtsanwaltsbüro
Prinz-Ludwig-Strasse 40A
85354 Freising (DE)**

(56) References cited:
**EP-A- 0 992 669     US-A- 5 970 947**

- **PATENT ABSTRACTS OF JAPAN vol. 2000, no. 05, 14 September 2000 (2000-09-14) & JP 2000 064879 A (TOYOTA MOTOR CORP), 29 February 2000 (2000-02-29)**
- **PATENT ABSTRACTS OF JAPAN vol. 2000, no. 06, 22 September 2000 (2000-09-22) & JP 2000 073821 A (TOYOTA MOTOR CORP), 7 March 2000 (2000-03-07)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

The present invention relates to a fuel injection. control apparatus applied to a diesel engine which operates with switching a combustion mode according to a driving condition.

In a diesel engine having an exhaust gas recirculation (EGR) system for recirculating part of exhaust gas into intake air, a higher EGR rate results in a larger combustion temperature drop and a reduced amount of nitrogen oxide (NOx) emission, where EGR rate is the ratio of the EGR gas to the intake air (fresh air + EGR gas) introduced into a combustion chamber. On the other hand, when the EGR rate exceeds a fixed limit, a smoke exhaust amount increases rapidly. For this reason, it had been considered that the EGR rate (30% - 50%) in which that smoke exhaust amount increased rapidly was a permissible upper limit.

Recently, it was confirmed that a peak exists in the change of the smoke exhaust amount according to the increase of the above EGR rate and the smoke exhaust amount decreases rapidly when the EGR rate is increased beyond the peak. It was found that the smoke exhaust amount can be made almost zero in 55% to 65% or more of EGR rate so long as suitable conditions are set through the adoption of an efficient EGR cooler, high-volume EGR introduction, adaptation of fuel injection timing, and the like. It has become also clear that its primary factor is that combustion becomes inactive at a high EGR rate, and hence the combustion temperature drops to a level not higher than the generation temperature of soot leading to a smoke.

In recent years, diesel engines attract attention, the diesel engines which can simultaneously reduce an amount of NOx emission and an amount of smoke emission by performing combustion at an EGR rate exceeding the above-mentioned peak, that is, so-called low temperature combustion. However, when fuel injection amount exceeds a constant rate, it becomes impossible to fully secure fresh air necessary for combustion in the above high EGR rate. Therefore, operation is performed in a diesel engine with switching a combustion mode between the normal combustion mode, in which combustion is performed at the EGR rate less than the above-mentioned peak, and the above-mentioned low temperature combustion mode according to an engine operation status.

In the low temperature combustion mode, since the combustion efficiency drops a little in connection with the high-volume EGR introduction in comparison with the normal combustion mode, the torque which an internal combustion engine generates drops even if a fuel injection amount is not changed. For example, as described in Japanese Laid-Open Patent Publication No. 2000-64879, a fuel injection control apparatus for a diesel engine is proposed, the apparatus which adjusts a fuel injection amount when switching the combustion mode so as to prevent torque fluctuations at the time of switching of the combustion mode resulting from the difference between torque production efficiencys. In this conventional fuel injection control apparatus, calculation maps of a fuel injection amount based on engine speed and required loads (accelerator manipulation amount etc.) or calculation functions of the fuel injection amount based on them are prepared separately for the normal combustion mode and low temperature combustion mode. The above-mentioned fuel injection amount is adjusted by switching those calculation maps or calculation functions according to the switching of the combustion mode.

Japanese Laid-Open Patent Publication No. 2000-64879 discloses the technology of performing the gradual-change processing of gradually changing a fuel injection amount from a value in the combustion mode before switching to a value in the combustion mode after the switching when adjusting the fuel injection amount at the time of combustion mode switching. According to such gradual-change processing, it is possible to suitably suppress the temporary deterioration of balance of the EGR rate and fuel injection amount in the combustion mode switching process resulting from the delay of change of the fresh air amount and EGR amount at the time of combustion mode switching, and further to reduce torque fluctuations.

According to the above-mentioned conventional technology, it is possible to suitably suppress the torque fluctuations at the time of switching of the combustion mode resulting from the difference of the torque production efficiency between combustion modes. But, there is still a room of improvement. Thus, generally in a diesel engine, a fuel injection amount is used as an index value of engine load in plenty of control other than the fuel injection amount control. Therefore, like the conventional fuel injection control apparatus, there is a possibility that a malfunction may occur in such other control when adjusting the fuel injection amount itself according to the switching of the combustion mode, or when performing a gradual-change processing to the fuel injection amount itself.

SUMMARY OF THE INVENTION

The objective of the present invention is to provide a fuel injection control apparatus for a diesel engine which can decrease torque fluctuations at the time of switching of a combustion mode without influencing other control systems.

To achieve the foregoing and other objectives and in accordance with the purpose of the present invention, a fuel injection control apparatus applied to a diesel engine that is capable of switching combustion modes according to a driving condition is provided. The apparatus computes a required injection amount based on an engine speed and a load acting on the engine, and corrects the computed required injection amount using a torque correction amount that represents a difference in the amount of injection for generating a required torque of the engine between different combustion modes, thereby determining an injection amount command value. When switching the combustion modes, the apparatus gradually changes the torque correction amount from a value required in the combustion mode before switching to a value required for the combustion mode after switching.

The present invention also provides a method for controlling a fuel injection control apparatus applied to a diesel engine that is capable of switching combustion mode according to a driving condition. The method includes: computing a required injection amount based on an engine speed and a load acting on the engine; correcting the required injection amount using a torque correction amount that represents a difference in the amount of injection required for generating a required torque between different combustion modes, thereby determining an injection amount command value; and gradually changing the torque correction amount from a value required in the combustion mode before switching to a value required for the combustion mode after switching when the combustion mode is switched.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Fig. 1 is a schematic diagram showing the structure of an internal combustion engine according to one embodiment of the present invention;
Fig. 2 is a diagram showing an example of setting of a required torque correction amount calculation map;
Fig. 3 is a graph showing a required injection amount and a correction amount of an injection.amount before and after combustion mode switching;
Fig. 4 is a flowchart showing a flow of processing at the time of combustion mode switching;
Fig. 5 is a flowchart of a delay/gradual-change counter calculation routine;
Fig. 6(A) is a diagram showing an example of setting a delay counter calculation map;
Fig. 6(B) is a diagram showing an example of setting a gradual-change counter calculation map;
Fig. 7 is a flowchart of a gradual-change coefficient calculation routine;
Fig. 8 is a diagram showing an example of setting a gradual-change coefficient calculation map;
Fig. 9 is a flowchart of an injection control command value calculation routine;
Fig. 10(a) is a graph showing changes of the required value of an injection system;
Fig. 10(b) is a graph showing changes of a command value according to the setting of a gradual-change coefficient; and
Fig. 11 is a time chart showing an example of a control at the time of combustion mode switching.

DETAILED DESCRIPTION OF THE PREFERRED EMBODIMENTS

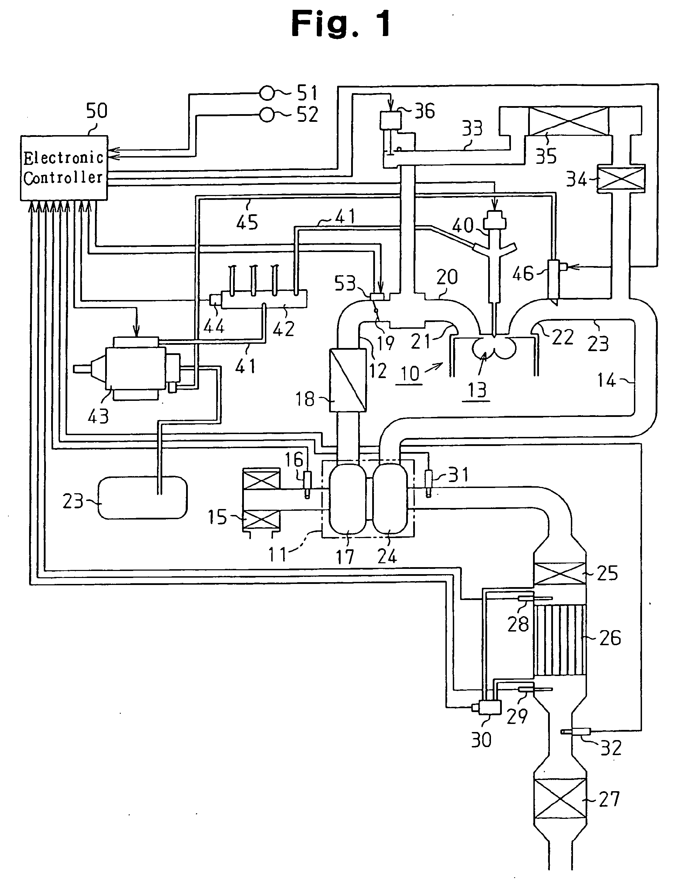

Hereafter, a fuel injection control apparatus for an internal combustion engine according to one embodiment of the present invention will be described with reference to Figs. 1 to 11.

As shown in Fig. 1, a diesel engine 10 comprises a common-rail fuel injection system, a turbocharger 11, an intake air passage 12, a combustion chamber 13, and an exhaust passage 14.

In the intake air passage 12 which constitutes an inlet system of the diesel engine 10, an air flow meter 16, a compressor 17 of the turbocharger 11, an inter cooler 18, and an intake throttle valve 19 are arranged in order from an air cleaner 15, arranged in the most upstream section, towards the downstream. The intake air passage 12 is branched in an intake manifold 20 provided in the downstream of the intake throttle valve 19, and is connected to the combustion chamber 13 of each cylinder of the diesel engine 10 through an inlet port 21.

On the other hand, in the exhaust passage 14 which constitutes the exhaust system of the diesel engine 10, an exhaust port 22 connected to the combustion chamber 13 of each cylinder is connected to the exhaust turbine 24 of the turbocharger 11 through an exhaust manifold 23. A NOx catalyst converter 25, a PM filter 26, and an oxidation catalytic converter 27 are arranged in the downstream of the exhaust turbine 24 in the exhaust passage 14 sequentially from the upstream.

The NOx catalyst converter 25 bears an occlusion reduction type NOx catalyst. This NOx catalyst occludes NOx in exhaust gas when the oxygen concentration of the exhaust gas is high, and it emits the occluded NOx when the oxygen concentration of the exhaust gas is low. The NOx catalyst reduces and purifies the emitted NOx when an sufficient amount of the unburned fuel component used as a reducing agent exists in the environment at the time of the above-mentioned NOx emission.

The PM filter 26 which is an exhaust gas filter for collecting PM in exhaust gas is formed of a porous material. This PM filter 26 bears an occlusion reduction type NOx catalyst similarly to the NOx catalyst converter 25, and purifies NOx in the exhaust gas. The PM which is collected is oxidized and removed by a reaction triggered by the NOx catalyst.

The oxidation catalytic converter 27 bears an oxidation catalyst, and oxidizes and purifies HC and CO in the exhaust gas.

An input gas temperature sensor 28 for detecting input gas temperature which is the temperature of the exhaust gas that flows into the PM filter 26, and an output gas temperature sensor 29 for detecting output gas temperature that is the temperature of the exhaust gas after passing through the PM filter 26 are arranged respectively in the upstream and downstream of the PM filter 26 in the exhaust passage 14. Furthermore, a differential pressure sensor 30 for detecting the pressure difference between the exhaust upstream and exhaust downstream of the PM filter 26 is arranged in the exhaust passage 14. Moreover, two oxygen sensors 31 and 32 for detecting oxygen concentrations in the exhaust gas are arranged respectively in the exhaust upstream of the NOx catalyst converter 25 and between the PM filter 26 and the oxidation catalytic converter 27 in the exhaust passage 14.

Furthermore, an exhaust gas recirculation (hereafter, referred to as EGR) system which recirculates a part of the exhaust gas into the air in the intake air passage 12 is provided in this diesel engine 10. The EGR system is equipped with an EGR passage 33 which communicates the exhaust passage 14 and intake air passage 12. The most upstream section of the EGR passage 33 is connected to the exhaust upstream of the exhaust turbine 24 in the exhaust passage 14. An EGR catalyst 34 which reforms the recirculated exhaust gas, an EGR cooler 35 which cools the exhaust gas, and an EGR valve 36 which adjusts a flow rate of the exhaust gas are arranged from the upstream in the EGR passage 33. The most downstream section of the EGR passage 33 is connected to the downstream of the intake throttle valve 19 in the intake air passage 12.

On the other hand, an injector 40 is provided in the combustion chamber of each cylinder of the diesel engine 10. Each injector 40 injects fuel to be combusted in the corresponding combustion chamber 13. The injector 40 of each cylinder is connected to a common rail 42 through a high-pressure fuel feed pipe 41. High-pressure fuel is fed to the common rail 42 through the fuel feed pump 43. The pressure of the high-pressure fuel in the common rail 42 is detected by a rail pressure sensor 44 installed in this common rail 42. Furthermore, low-pressure fuel is fed to an fuel addition injector 46 through a low-pressure fuel feed pipe 45 from the fuel feed pump 43.

An electronic controller 50 which manages various types of control of such a diesel engine 10 comprises a CPU which executes various types of processing relating to the control of the diesel engine 10, a ROM which temporarily stores a program and data necessary for the control, a RAM which stores the processing result of the CPU and the like, and input and output ports for performing the input and output of signals to and from the external. Besides the respective sensors mentioned above, an NE sensor 51 which detects engine speed ne, an accelerator sensor 52 which detects an accelerator manipulation amount accp, and a throttle valve sensor 53 which detects a degree of opening of the intake throttle valve 19 are connected to the input ports of the electronic controller 50. Drive circuits for the intake throttle valve 19, EGR valve 36, and the like are connected to the output ports of the electronic controller 50.

The electronic controller 50 outputs a command signal to the drive circuit of each equipment connected to the above-mentioned output port according to an engine operation state grasped from detection signals inputted from above-mentioned respective sensors. In this way, the electronic controller 50 performs various types of control such as control of fuel injection amount from the injector 40, control of a fuel injection period, addition control of fuel from the fuel addition injector 46, EGR control, and control of the fuel addition from the fuel addition injector 46.

The above-mentioned EGR control in this diesel engine 10 is performed by $O_2$ feedback control of a degree of opening of the EGR valve 36 and intake throttle valve 19 on the basis of the oxygen concentrations in the exhaust gas detected by the oxygen sensors 31 and 32. On this $O_2$ feedback control, an air-fuel ratio of an air-fuel mixture combusted in the combustion chamber 13 is first obtained on the basis of the detection result of the above-mentioned oxygen concentrations, and then, a present EGR rate (ratio of an amount of EGR gas and intake air amount) is calculated from the air-fuel ratio. Target degrees of opening of the EGR valve 36 and intake throttle valve 19 (a target degree of opening of the EGR valve and a target degree of opening of the throttle valve) are calculated so that the amount of EGR gas and intake air amount with which the EGR rate becomes the target EGR rate may be obtained. Those degrees of opening are adjusted according to the target degrees of opening.

As catalyst control for maintaining the exhaust gas purifying performance of this diesel engine 10, PM regeneration control, Sulfur discharge control, and NOx reduction control are performed if needed.

In the PM regeneration control, in order to combust PM deposited on the PM filter 26 to make it exhausted as $CO_2$ and $H_2O$ temperature rising (for example, 600°C to 700°C) of catalyst bed temperature is attained by continuously repeating fuel-addition-to-exhaust from the fuel addition injector 46.

The Sulfur discharge control is performed so as to cancel the decrease of the NOx occlusion performance of the NOx catalysts, born by the NOx catalyst converter 25 and the PM filter 26, by the occlusion of the sulfur oxide (SOx). In this Sulfur discharge control, similarly to the above-mentioned PM regeneration control, temperature rising of the catalyst bed temperature (for example, 600°C to 700°C) by continuously repeating the fuel addition from the fuel addition injector 46. Thereafter, performing the intermittent fuel-addition-to-exhaust in a fixed interval from this fuel addition injector 46 makes SOx, which is occluded by the NOx catalyst, reduced and emitted.

The NOx reduction control is performed so as to reduce NOx that is occluded by the NOx catalysts born by the NOx catalyst converter 25 and the PM filter 26, into $N_2$, $CO_2$, and $H_2O$ and to emit them. In this NOx reduction control, intermittent fuel-addition-to-exhaust in a fixed interval from the fuel addition injector 46 is performed, and the catalyst bed temperature is held comparatively at low temperature (for example, 250°C to 500°C).

Furthermore, the diesel engine 10 is operated with switching the combustion mode according to an engine operation status such as the engine speed, the engine load, and a request of the catalyst control. The following four combustion modes exist as the combustion modes to be switched.

<Normal Combustion Mode>

In the normal combustion mode, combustion is performed at a lean air-fuel ratio with setting the EGR rate lower than the EGR rate where the above mentioned amount of smoke emission becomes a peak. In the normal combustion mode, besides the main injection, pilot injection which is auxiliary injection preceding the main injection is performed in regions other than a high speed and heavy loading region.

<Temperature Rising Multi-Injection Mode>

The temperature rising multi-injection mode has the setting of the EGR rate and air-fuel ratio which are the same as those in the normal combustion mode, and is a mode in which three types of fuel injection is performed. The three types of fuel injection are the pilot injection and main injection, and furthermore, an after injection which is auxiliary injection performed in an expansion stroke and an exhaust stroke after the main injection. This temperature rising multi-injection mode is performed in order to raise the catalyst bed temperature up to the temperature necessary for the implementation of temperature rising of the catalyst bed temperature by the fuel-addition-to-exhaust in the PM regeneration control and Sulfur discharge control. This temperature rising multi-injection mode is a kind of above-mentioned normal combustion mode fundamentally.

<Low Temperature Lean Combustion Mode>

The low temperature lean combustion mode is one of the above-mentioned low temperature combustion modes performing combustion with making the EGR rate higher than the EGR rate at which the above-described amount of smoke emission becomes a peak, by the high-volume EGR introduction. This low temperature lean combustion'mode is performed with aiming at the temperature rising of the catalyst bed temperature in a low rotation speed and low loading region, and the reduction of the amount of NOx emission. In the low temperature lean combustion mode, a base air-fuel ratio is set in a range of about 19 to 21, and advancing of main injection timing and pressure increase of injection pressure are attained in comparison with the normal combustion mode so as to suitably maintain the combustion state at the high EGR rate. In this diesel engine 10, there is a possibility that not only combustion is inactive and an effect of the pilot injection is low at such a high EGR rate, but also the amount of smoke emission increases by the implementation of the pilot injection. Hence, the pilot injection is made not to be performed in the low temperature lean combustion mode.

<Low Temperature Rich Combustion Mode>

The low temperature rich combustion mode is one of the low temperature combustion modes which performs the high-volume EGR introduction similarly to the low temperature lean combustion mode, and is performed so as to secure ambient conditions necessary for the SOx emission under the Sulfur discharge control. In the low temperature rich combustion mode, the base air-fuel ratio is set in a range of about 17 to 21, and an exhaust-air-fuel ratio is made a value that is equal to or less than the theoretical air-fuel ratio by the fuel-addition-to-exhaust from the fuel addition injector 46. Also in the low temperature rich combustion mode, similarly to the low temperature lean combustion mode, advancing of the main injection timing and pressure increase of the injection pressure are attained, and the pilot injection is prohibited.

At the time of combustion mode switching between respective combustion modes which is explained above, the change of controlled variables of the inlet system and EGR system such as the above-mentioned target degree of opening of the throttle valve and a target degree of opening of the EGR valve is made in connection with the change of the required EGR rate. At the time of such combustion mode switching, the change of controlled variables of the fuel system such as fuel injection timing, injection pressure, and the presence of the implementation of the above-mentioned pilot injection and after injection is also made.

In this way, when the EGR rate, fuel injection timing, injection pressure, and injection mode (presence of auxiliary injection) are changed, a combustion state changes in connection with them, and a torque production efficiency (magnitude of the torque produced by combustion of the fuel of the unit injection quantity) changes. Hence, so as to avoid an abrupt torque change before and after combustion mode switching, it is necessary to adjust the required injection amount of fuel at the time of combustion mode switching, eventually, the injection command value of the injector 40 (execution time of the fuel injection of the injector 40 which is issued so as to secure the request injection amount). In connection with the change of the injection pressure, fuel injection timing, and injection mode, the injection rate (mass of the fuel injected by unit time) of the injector 40 changes, and hence, even when an injection amount command value is the same, the mass of the fuel actually injected changes. Therefore, so as to avoid the abrupt torque change before and after combustion mode switching, it is necessary to make an injection amount command value adjusted even if it responds to the change of the injection rate at the time of combustion mode switching.

In this embodiment, the occurrence of the abrupt torque change before and after combustion mode switching is avoided by calculating a main injection amount command value, which is issued to the injector 40 so as to command an injection period of fuel at the time of the main injection, as follows. The electronic controller 50 calculates such a main injection amount command value qfinm.

Thus, at the time of the calculation of the main injection amount command value qfinm, a required injection amount qfin, which is a required value of injection amount necessary for securing required torque, is first calculated on the basis of the engine speed ne and the accelerator manipulation amount accp. Differences of a torque production efficiency every combustion mode mentioned above and the like are not taken into consideration in the required injection amount qfin calculated here. Hence, when the engine speed ne and accelerator manipulation amount accp are the same, the values become the same even if combustion modes differ.

When auxiliary injections such as pilot injection and after injection are performed next, the injection amounts of these auxiliary injections are calculated on the basis of the engine speed ne, above-mentioned required injection amount qfin, etc. Then, what is obtained by subtracting those calculated injection amounts of the auxiliary injections from the above-mentioned required injection amount qfin is set as a required main injection amount tqfinm. On the other hand, when only the main injection is performed, the value of the required injection amount qfin is set as a value of the request main injection amount tqfinm as it is.

Then, the following respective correction amounts of the injection amounts, that is, a torque correction amount qdm, a waviness correction amount qdi, and a cylinder internal pressure correction amount qdp are calculated. As shown in the following formula (1), by the required main injection amount tqfinm being corrected with them, the main injection amount command value qfinm is calculated.

$$\text{qfinm} \leftarrow \text{tqfin} + \text{qdm} + \text{qdi} + \text{qdp} \quad ... \ (1)$$

The torque correction amount qdm is a correction amount of the injection amount for reflecting the difference between injection amounts of the combustion modes necessary for generating the required torque. For example, in a combustion mode such as the low temperature lean combustion mode or low temperature rich combustion mode, in which combustion becomes inactive in consequence of high-volume EGR introduction, and hence, the above-mentioned torque production efficiency drops, a large value is set as this torque correction amount in comparison with the normal combustion mode and temperature rising multi-injection mode which are not so.

On the other hand, when the pilot injection is performed, pulsation occurs in the fuel pressure inside the subsequent high-pressure fuel feed pipe 41 and fuel chamber of the injector 40. In consequence, the injection rate of the injector 40 at the time of the main injection being executed changes. That is, the injection rate of the injector 40 at the time of the main injection changes according to the presence of the pilot injection, the injection amount of the pilot injection, and an interval between the pilot injection and main injection (pilot interval). The above-mentioned waviness correction amount qdi is a correction amount of the injection amount for reflecting a changed portion of the injection rate of the injector 40 at the time of the main injection in connection with the implementation of such multiple injections.

Furthermore, when changing fuel injection timing (main injection timing ainjm) of the main injection, the cylinder internal pressure at the time of the main injection changes, and the injection rate of the injector 40 at the time of the main injection changes. For example, when the main injection timing is changed so as to approach a top dead center of compression, the cylinder internal pressure at the time of the main injection increases, and the injection rate of the injector 40 drops. The cylinder internal pressure correction amount qdp is a correction amount of the injection amount for reflecting a changed portion of the injection rate resulting from the change of the cylinder internal pressure at the time of such the main injection.

The torque correction amount qdm among three correction amounts of the injection amounts mentioned above is a correction amount of the injection amount which changes the mass of fuel actually injected at the time of the main injection, that is, reflects the fuel mass of the main injection required. On the other hand, the waviness correction amount qdi and the cylinder internal pressure correction amount qdp are the correction amounts of the injection amounts for eliminating the deviation between the fuel mass of the main injection required, and the fuel mass actually injected from the injector 40.

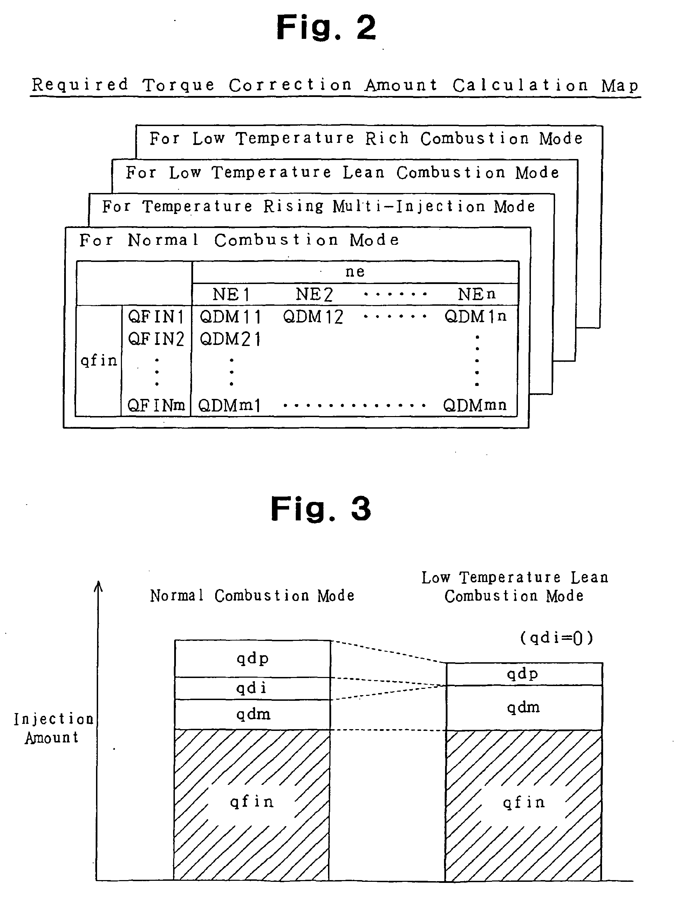

The required values of these correction amounts of injection amounts are calculated based on combustion mode mdcbd for injection, the engine speed ne, and the required injection amount qfin which are described later. A calculation map is prepared for every combustion mode mdcbd for injection. Each map defines the relationship among the engine speed ne, the required injection amount qfin, and the required value of the correction amount of the injection amount. Then, the required values of respective correction amounts of the injection amounts, tqdm, tqdi, and tqdp are calculated while switching the calculation maps according to the present combustion mode mdcbd for injection. That is, four required value calculation maps for the normal combustion mode, temperature rising multi-injection mode, low temperature lean combustion mode, and low temperature rich combustion mode are provided for each of the torque correction amount qdm, waviness correction amount qdi, and cylinder internal pressure correction amount qdp. Fig. 2 shows an example of the calculation map for the required value tqdm of the torque correction amount qdm. Each calculation map for such a correction amount of the injection amount is beforehand stored in ROM of the electronic controller 50.

Fig. 3 shows examples of setting the required injection amount qfin and the respective correction amounts of injection amounts, qdm, qdi, and qdp before and after the combustion mode switching in the low temperature lean combustion mode from the normal combustion mode. In the example of this figure, the torque correction amount qdm is increased according to drop of the torque production efficiency by the high-volume EGR introduction after the combustion mode switching to the above-mentioned low temperature lean combustion mode. The cylinder internal pressure correction amount qdp is decreased according to the drop of the cylinder internal pressure at the time of the main injection by the advancing of the main injection timing after the switching, and the increase of the injection rate of the injector 40. Furthermore, the waviness correction amount qdi is decreased to 0 according to no change of the injection rate at the time of the main injection due to the pilot injection being prohibited after the above-mentioned switching. Then, by the change of these correction amounts of the injection amounts, the total injection amount command value is changed so that the torque of the diesel engine 10 before and after the combustion mode switching is held uniformly.

On the other hand, although the abrupt torque change at the time of the combustion mode switching is eliminated in this way, the change of all the injection amount command values for that are performed through the change of the above-mentioned respective correction amounts of the injection amounts. Hence, as shown in this figure, the required injection amount qfin is held at the value that the same as that before combustion mode switching, even after the switching. In this way, the required injection amount qfin is always made a constant value so long as the engine speed ne and the required load (accelerator manipulation amount) are the same. Hence, regardless of the combustion mode switching, the amount qfin can be used now universally as an index value of the engine load in various types of control.

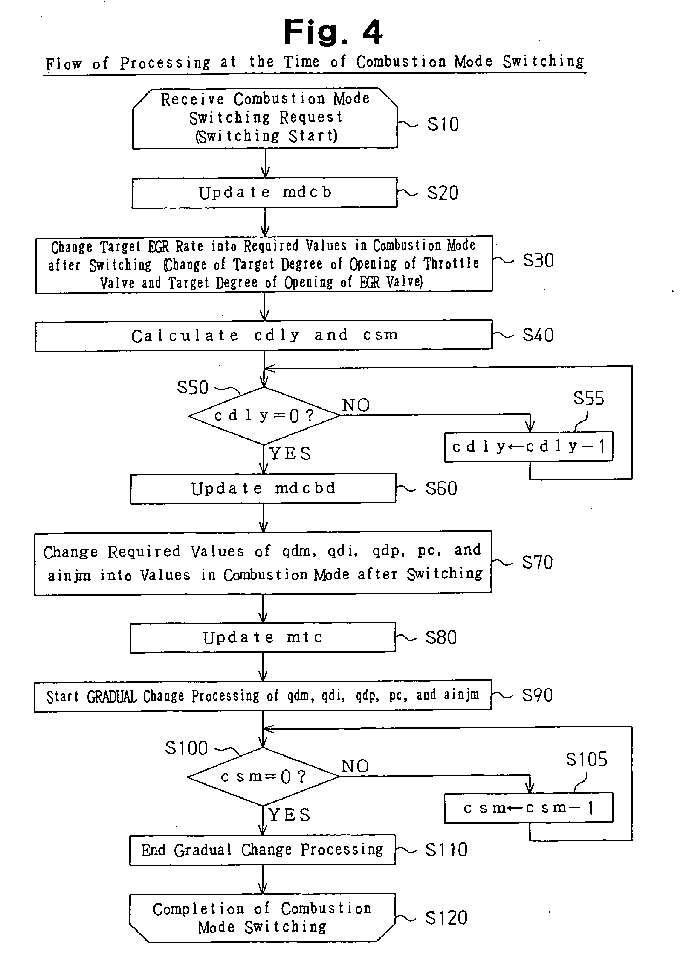

Fig. 4 shows a flow of processing of the electronic controller 50 at the time of combustion mode switching where the change of various controlled variables which are described above is performed.

As shown in this chart, when combustion mode switching is requested and the switching is started (S10), the electronic controller 50 first updates the required combustion mode mdcb at the point to a value corresponding to the combustion mode after switching (S20). In regard to this required combustion mode mdcb and a combustion mode mdcbd for injection which will be described later, their values 1, 3, 4, and 5 correspond to the normal combustion mode, temperature rising multi-injection mode, low temperature lean combustion mode, and low temperature rich combustion mode, respectively.

When the value of the required combustion mode mdcb is updated in this way, the electronic controller 50 changes the target EGR rate into the required value of the combustion mode after switching, and changes the target degree of opening of the throttle valve and the target degree of opening of the EGR valve according to it (S30). Thereby, the intake air amount and the amount of EGR gas begin to be changed so that the EGR rate become the required value of the combustion mode after the switching. A fixed response delay exists in the change of controlled variables of the inlet system and EGR system such as the intake air amount and the amount of EGR gas due to the delay of gas flow in the intake air passage 12 or EGR passage 33. Therefore, the actual controlled variables of the inlet system and EGR system gradually undergo a transition to the required values after the combustion mode switching over a certain amount of time after the change of the target EGR rate here.

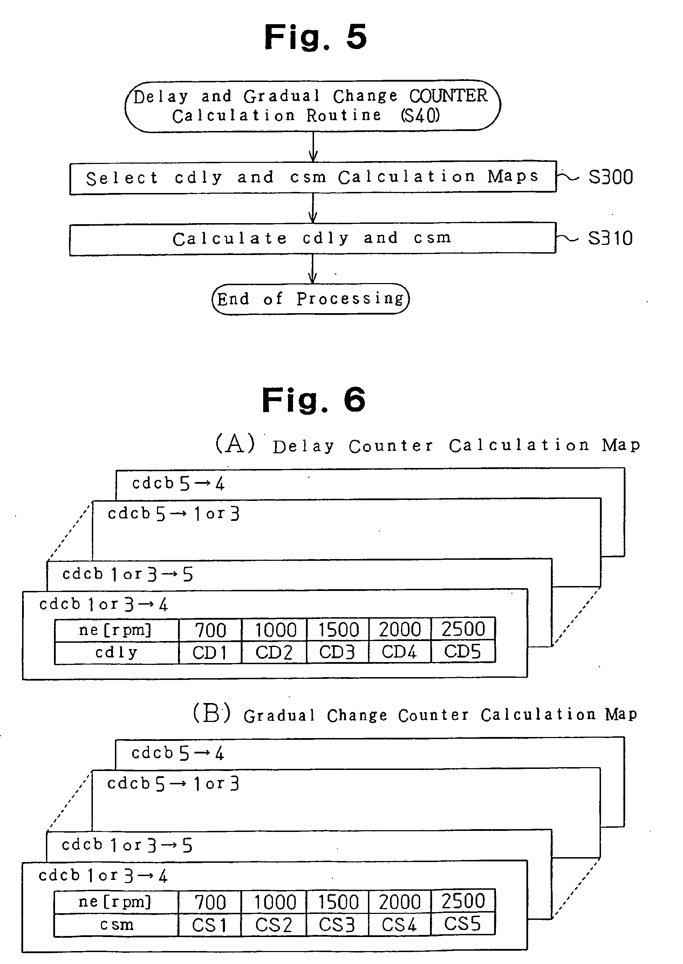

At the time of the update of the required combustion mode mdcb, the electronic controller 50 calculates the delay counter cdly and gradual-change counter csm (S40). The calculation of these counters is performed by the delay/gradual-change counter calculation logic (Fig. 5) described later.

Thereafter, the electronic controller 50 performs the decrement of the value of the delay counter cdly periodically, and the subsequent processing is suspended until the value is set to 0 (S50 and S55). The controlled variables of the inlet system and EGR system gradually change from the required values before the combustion mode switching to the required values after the switching with holding the controlled variables of the injection system in the meantime at the required value of the combustion mode before the switching. Hereafter, such a period will be referred to as a delay period.

When the value of the delay counter cdly is set to 0 (S50: YES) and the above-mentioned delay period expires, the electronic controller 50 updates the value of the combustion mode mdcbd for injection to the value according to the combustion mode after the switching (S60). Then, the electronic controller 50 changes the required values of controlled variables of the injection system, that is, the required values of respective correction amounts of injection amounts of the torque correction amount qdm, the waviness correction amount qdi, and the cylinder internal pressure correction amount qdp, the target injection pressure pc, the main injection timing ainjm into the values after switching (S70).

At this point, the above-mentioned controlled variables of the inlet system and EGR system are in the process of still undergoing a transition to the required values of the combustion mode after the switching from the required values of the combustion mode before the switching. At the point of the required values of these controlled variables of the injection system being changed, actual setting values of these controlled variables of the injection system are made not to be changed promptly for the gradual-change processing described later.

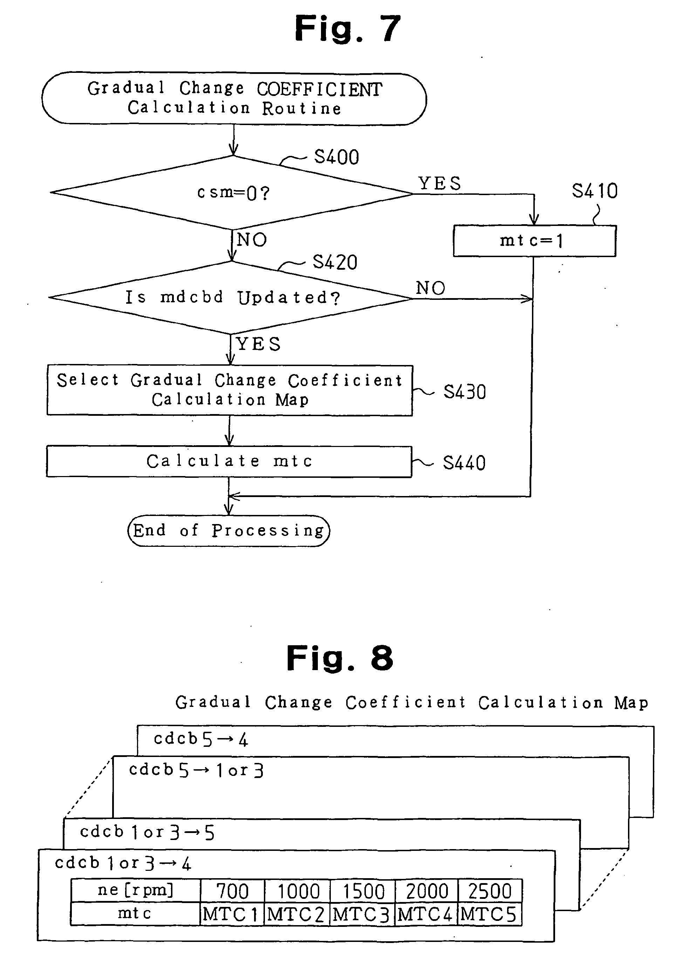

The electronic controller 50 updates a gradual-change coefficient mtc, which relates to such gradual-change processing, at the time of the update of the combustion mode mdcbd for injection (S80). The update of this gradual-change coefficient mtc is performed in the gradual-change coefficient calculation routine (Fig. 7) described later. The gradual-change coefficient mtc is a coefficient which determines a gradual-change extent of controlled variables of the injection system in the above-mentioned gradual-change processing.

The electronic controller 50 starts the gradual-change processing of respective correction amounts of injection amounts of the torque correction amount, the waviness correction amount, and the correction amount of cylinder internal pressure, and the respective controlled variables of the injection system of the injection pressure, and main injection timing on the basis of the calculated gradual-change coefficient mtc (S80). In this gradual-change processing, these respective controlled variables of the injection system are gradually changed into the required values in the combustion mode after the switching from the required values in the combustion mode before the switching.

Thereafter, the electronic controller 50 decrements the value of the gradual-change counter csm periodically (S105), and continues the gradual-change processing until the value is set to 0. Hereafter, the period when such a gradual-change processing is continued will be described as a gradual-change period.

After the value of the gradual-change counter csm is set to 0 (S100: YES) and the gradual-change period expires, the electronic controller 50 ends the gradual-change processing (S110). Thereby, the respective controlled variables of the injection system are made the required values of the combustion mode after the switching. The electronic controller 50 now ends the processing relating to the combustion mode switching.

As mentioned above, in this embodiment, at the time of combustion mode switching, while setting the delay period from the change of targeted values of controlled variables of the inlet system and EGR system to the change start of controlled variables of the injection system, the controlled variables of the injection system are gradually changed into the required values after the combustion mode switching in a subsequent gradual-change period. Thereby, the controlled variables of the injection system is favorably shifted according to the response delay of the controlled variables of the inlet system and EGR system caused by the delay of the gas flow, and the torque fluctuations at the time of the combustion mode switching is suppressed.

Fig. 5 shows a flowchart of delay/gradual-change counter calculation logic used for the calculation of the delay counter cdly and the gradual-change counter csm (Fig. 4: S40).

When the processing of this routine is started, the electronic controller 50 first selects the delay counter calculation map and gradual-change counter calculation map corresponding to the combination at step S300 according to the combination of the combustion modes before and after the switching respectively from a plurality of calculation maps beforehand stored in the ROM of the electronic controller 50. That is, two or more delay counter calculation maps and gradual-change counter calculation maps are provided for every combination of the combustion modes switched, respectively as exemplified in Figs. 6(A) and 6(B), respectively. The correspondence relationship between the engine speed ne in the combination of respective combustion modes and the optimum values of the corresponding counters is shown in these calculation maps.

Subsequently, the electronic controller 50 calculates the delay counter cdly and gradual-change counter csm at step S310 on the basis of the engine speed ne by using the delay counter calculation map and gradual-change counter calculation map which are selected respectively.

Although omitted in the flowchart, at the time of switching between the normal combustion mode and temperature rising multi-injection mode, there is no change of controlled variables of the inlet system and EGR system such as the EGR rate and air-fuel ratio. But, only the presence of implementation of the after injection changes. Hence, it is not necessary to provide the delay period and gradual-change period at the time of the change of the controlled variables of the injection system, and hence, the values of the delay counter cdly and the gradual-change counter csm are set at 0.

In this way, in this embodiment, variable setting of the delay counter cdly and gradual-change counter csm, that is, the length of the delay period and the gradual-change period is performed according to the combination of the combustion modes before and after the switching, and the engine speed ne. Therefore, according to the change of the response delay extents of controlled variables of the inlet system and EGR system'at the time of the combustion mode switching which changes with the combination of the combustion modes before and after the switching, and the engine speed ne at the time of the switching, the setting of the optimal delay period and gradual-change period is possible.

Fig. 7 shows a flowchart of the gradual-change coefficient calculation routine used for the calculation of the gradual-change coefficient mtc (Fig. 4: S80). The processing of this routine is periodically executed by the electronic controller 50 during engine operation. Therefore, actually, although the calculation of the gradual-change coefficient mtc is performed also at any time except during the switching of the combustion modes, its value is updated only during the gradual-change period.

When the processing of this routine is started, the electronic controller 50 first determines at step S400 whether the value of the gradual-change counter csm is 0, that is, whether it is during the gradual-change period. When the value of the gradual-change counter csm is 0 and it is not during the gradual-change period (S400: NO), the electronic controller 50 advances the processing to step S410, and sets the value of the gradual-change coefficient mtc at 1 at step S410 to temporarily suspend the processing of this routine. When the value of the gradual-change counter csm is not 0 (S400: NO), the electronic controller 50 advance the processing to step S420.

At step S420, the electronic controller 50 determines whether the update of the combustion mode mdcbd for injection was made between the last processing period of this routine, and the current processing period. When a judgment of the purport that the update was performed is done (YES), the electronic controller 50 advances the processing to step S430, or otherwise (NO), it does not update the value of the gradual-change coefficient mtc, but temporarily suspends the processing of this routine.

At step S430, the electronic controller 50 selects the gradual-change coefficient calculation map corresponding to the combination of the combustion modes before and after the switching in on-going combustion mode switching in the actual condition from a plurality of calculation maps beforehand stored in the ROM of the electronic controller 50. That is, two or more gradual-change coefficient calculation maps are provided for every combination of the combustion modes, which are switched, as exemplified in Fig. 8. The correspondence relationship between the engine speed ne in the combination of respective combustion modes and the optimum values of the gradual-change coefficient mtc is shown in these calculation maps. A value which is larger than zero and not more than one is set as the map values of the gradual-change coefficient mtc in these calculation maps ($0 < mtc \leq 1$).

At subsequent step S440, by using the selected calculation map, the electronic controller 50 calculates the gradual-change coefficient mtc on the basis of the engine speed ne, and updates the value. The electronic controller 50 temporarily suspends the processing of this routine after the update.

Hence, the value of the gradual-change coefficient mtc is held at one in periods other than the gradual-change period. The gradual-change coefficient mtc is updated to a value which is larger than zero and not more than one and is calculated from the calculation map at the time of the update of combustion mode mdcbd for injection, and the updated value is held in the gradual-change period. Then, the value of the gradual-change coefficient mtc is again returned to 1 with the termination of the gradual-change period.

The variable setting of the value of the gradual-change coefficient mtc which determines the gradual-change extent of each controlled variable of the injection system in the gradual-change period is performed in this embodiment according to the combination of the combustion modes before and after the switching, and the engine speed ne in this way. Therefore, according to the change of the response delay extent of the controlled variables of the inlet system and EGR system at the time of combustion mode switching which changes with the combination of the combustion modes before and after the switching, and the engine speed ne at the time of the switching, the gradual-change extent of each injection controlled variable in the gradual-change period can be set at the optimal value.

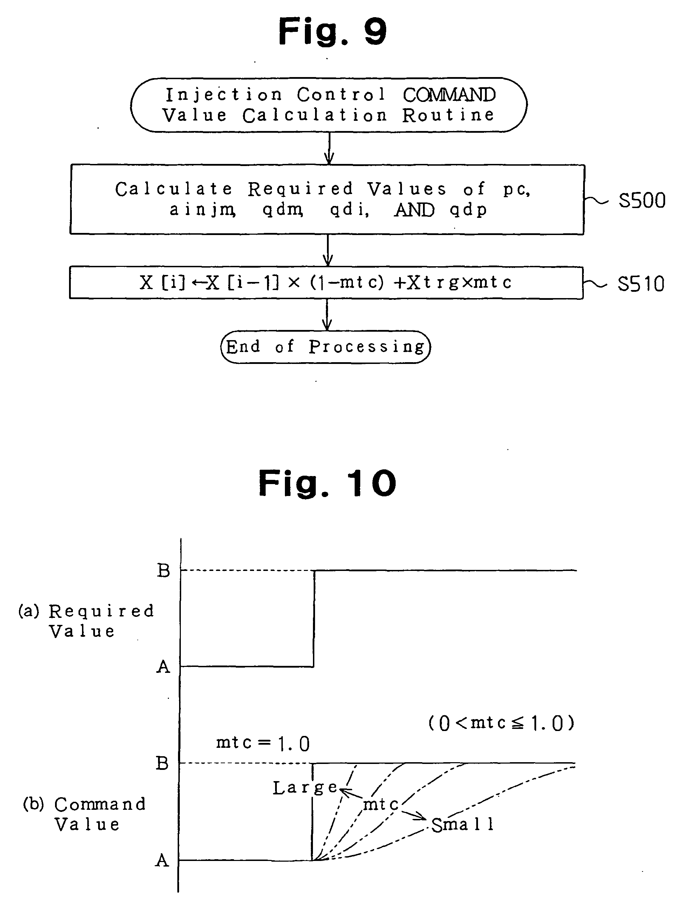

Subsequently, the calculation of those command values will be explained about respective controlled variable of the injection system of the target injection pressure pc, main injection timing ainjm, and above-mentioned respective correction amounts of injection amounts (the torque correction amount qdm, the waviness correction amount qdi, and the cylinder internal pressure correction amount qdp) in this embodiment. These calculations are performed through the injection control command value calculation routine shown in Fig. 9. The processing of the injection system control command value calculation routine is periodically performed by the electronic controller 50 in engine operation.

When the processing of this routine is started, the electronic controller 50 first calculates the required values of the above-mentioned respective controlled variables of the injection system at step S500 by using the calculation map corresponding to the combustion mode mdcbd for injection. The calculation of the required values tqdm, tqdi, and tqdp of respective correction amounts of injection amounts (the torque correction amount qdm, waviness correction amount qdi, and cylinder internal pressure correction amount qdp) here is as mentioned above. On the other hand, the required values pctrg and ainjtrg of the target injection pressure pc and main injection timing ainjm are calculated on the basis of the combustion mode mdcbd for injection, engine speed ne, and required load (for example, the accelerator manipulation amount etc.) similarly to the above-mentioned respective correction amounts of injection amounts.

At subsequent step S510, the electronic controller 50 calculates those command values according to the following formulas (2) to (6) for respective controlled variables of the injection system whose required values are calculated at step S500. X [i] denotes a command value of a controlled variable X of the injection system calculated in the current execution period of this routine, and X [i-1] denotes a command value of a controlled variable X of the injection system which was calculated in the last execution period of this routine, respectively. X denotes an arbitrary object among the above-mentioned respective controlled variables of the injection system, that is, the torque correction amount qdm, the waviness correction amount qdi, the cylinder internal pressure correction amount qdp, the target injection pressure pc, and the main injection timing ainjm.

$$qdm[i] \leftarrow qdm[i-1] \times (1 - mtc) + tqdm \times mtc \qquad (2)$$

$$qdi[i] \leftarrow qdi[i-1] \times (1 - mtc) + tqdi \times mtc \qquad (3)$$

$$qdp[i] \leftarrow qdp[i-1] \times (1 - mtc) + tqdp \times mtc \qquad (4)$$

$$pc[i] \leftarrow pc[i-1] \times (1 - mtc) + pctrg \times mtc \qquad (5)$$

$$ainjm[i] \leftarrow ainjm[i-1] \times (1 - mtcc) + ainjmtrg \times mtcc \qquad (6)$$

As shown in the above formulas, the command values of the above-mentioned respective controlled variables of the injection system are calculated from those required values by weighted mean processing. Specifically, weighting is performed for the respective controlled variables of the injection system by multiplying the command value (X [i-1]), calculated in the last execution period of this routine, by (1 - mtc), and the present required value Xtrg by mtc, respectively, and a summation of them is calculated as the command value (X[i]).

Fig. 10 (b) shows changes of the value of the gradual-change coefficient mtc for the transition of the command value when the required value Xtrg of a controlled variable of the injection system X changes from a value A to a value B discretely, as shown in Figure (a). As shown in this figure, when the value of the gradual-change coefficient mtc is 1, the command value X [i] calculated here undergoes a transition with taking always the same value as the required value Xtrg. On the other hand, when the value of the gradual-change coefficient mtc is less than one, the command value X [i] undergoes a transition with response delay to the change of the required value Xtrg. The response delay of the command value X [i] to the change of the required value Xtrg becomes large as the value of the gradual-change coefficient mtc approaches zero. Therefore, according to the setting of the value of this gradual-change coefficient mtc, the gradual-change extents of the above-mentioned respective controlled variables of the injection system are determined.

Thereafter, the electronic controller 50 corrects the required main injection amount tqfinm according to the command values of respective correction amounts of injection amounts, qdm, qdi, and qdp calculated by the above-mentioned calculation routine to calculate the main injection amount command value qfinm. The electronic controller 50 makes the injector 40 execute the main injection on the basis of the main injection amount command value qfinm, and each command value of the target injection pressure pc and main injection timing ainjm which is calculated in the above-mentioned calculation routine.

As mentioned above, the value of the gradual-change coefficient mtc is set at 1 in a state other than the gradual-change period during the above-mentioned combustion mode switching, and the gradual-change processing of the above-mentioned respective controlled variables of the injection system is not performed. Thus, with limiting to the gradual-change period during the combustion mode switching, the gradual-change processing of the above-mentioned respective controlled variables of the injection system is performed. Oat the time of the switching between the normal combustion mode and temperature rising multi-injection mode, as mentioned above, the gradual-change period is not provided and the gradual-change processing of controlled variables of the injection system is not performed.

As described above, in this embodiment, the gradual-change processing of the torque correction amount qdm, the waviness correction amount qdi, and the cylinder internal pressure correction amount qdp is performed by using the same gradual-change coefficient mtc. Hence, the gradual-change extent in the gradual-change period during the combustion mode switching is made uniform. Furthermore, in this embodiment, the gradual-change processing of the target injection pressure pc and main injection timing ainjm is performed also by using the same gradual-change coefficient mtc as the respective correction amounts of injection amounts, qdm, qdi, and qdp, and gradual-change extents of these targets injection pressure pc and the main injection timing ainjm in the above-mentioned gradual-change period are also made uniform. Accordingly, in this embodiment, all of the above-mentioned respective controlled variables of the injection system synchronize each other and undergo a transition at the uniform gradual-change ratio in the gradual-change period during the combustion mode switching.

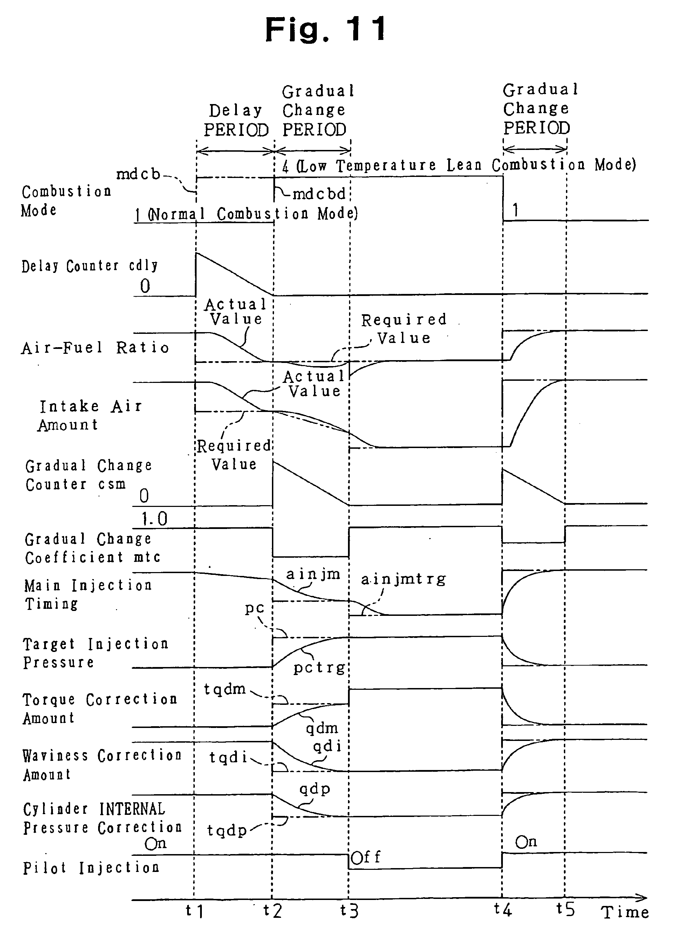

Fig. 11 shows an example of the control in the combustion mode switching between the normal combustion modes and low temperature lean combustion mode in this embodiment explained above.

At time t1 of this figure, when a switching request of the combustion mode from the normal combustion mode to the low temperature lean combustion mode is performed, the value of the required combustion mode mdcb is updated from the value 1, which shows the normal combustion mode, to the value 4 which shows the low temperature lean combustion mode. At this point, the combustion mode mdcbd for injection is held at the value 1 which shows the normal combustion mode. At time t1, the delay counter cdly is updated into a value which is calculated in the delay/gradual-change counter calculation routine and corresponds to the switching to the low temperature lean combustion mode from the normal combustion mode, and thereafter, that value is periodically decremented until the value becomes zero.

Furthermore, at time t1, the required values of the air-fuel ratio of the air-fuel mixture, combusted in the combustion chamber 13, and the intake air amount are decreased so as to obtain the high required EGR rate in the low temperature lean combustion mode. Then, the target degree of opening of the EGR valve and the target degree of opening of the throttle valve are changed so that the air-fuel ratio and intake air amount which have those required values that are decreased may be obtained. Specifically, the target degree of opening of the throttle valve is decreased at this time, and the target degree of opening of the EGR valve is increased greatly. Thereby, hereinafter, the air-fuel ratio and intake air amount are decreased gradually until the required EGR rate in the low temperature lean combustion mode is obtained.

At time t2, when the delay counter cdly is decremented to 0 and the delay period expires, the value of the combustion mode mdcbd for injection is updated from the value 1, which shows the normal combustion mode, to the value 4 which shows the low temperature lean combustion mode. At this point, the gradual change counter csm is updated into a value which is calculated in the above-mentioned delay/gradual-change counter calculation routine and corresponds to the switching to the low temperature lean combustion mode from the normal combustion mode, and thereafter, that value is periodically decremented until the value becomes zero. At time t2, the gradual-change coefficient mtc is updated into a value which is calculated in the above-mentioned gradual-change coefficient calculation routine and corresponds to the switching to the low temperature lean combustion mode from the normal combustion mode.

Furthermore, at time t2, the required values pctrg, ainjmtrg, tqdm, tqdi, and tqdp of respective controlled variables of the injection system of the target injection pressure pc, the main injection timing ainjm, the torque correction amount qdm, the waviness correction amount qdi, and the cylinder internal pressure correction amount qdp are changed into the values in the low temperature lean combustion mode from the values in the normal combustion mode. For example, the required value pctrg of the target injection pressure pc is increased so as to suppress the deterioration of the combustion state in connection with inactive combustion caused by the high-volume EGR introduction in the low temperature lean combustion mode. The required value ainjmtrg of the main injection timing ainjm is changed into a value in the advancing side so as to suppress the deterioration of the combustion state accompanying the inactive combustion similarly. On the other hand, the required value tqdm of the torque correction amount qdm is increased according to the drop of the torque production efficiency caused by inactive combustion, and the required value tqdi of the waviness correction amount qdi is decreased to zero according to the interruption of the pilot injection accompanying the switching to the low temperature lean combustion mode. Furthermore, the required value tqdp of the cylinder internal pressure correction amount qdp is decreased according to the drop of the cylinder internal pressure at the time of the main injection which accompanies the advancing of the main injection timing ainjm.

Thereafter, each of these controlled variables of the injection system is gradually changed towards the above-mentioned required value, which has been updated, at the gradual-change ratio according to the gradual-change coefficient mtc updated. When the gradual-change counter csm is decremented to zero at time t3, the gradual-change coefficient mtc becomes 1, the change processing of the above-mentioned respective controlled variables of the injection system is ended, and the command value of each controlled variable of the injection system becomes a required value in the low temperature lean combustion mode.

In the example of this figure, the main injection timing ainjm is changed also in the delay period. This is the result of applying the intake pressure correction corresponding to the change of the intake pressure accompanying the rapid change of the target degree of opening of the throttle valve after the update of the required combustion mode mdcb. In the intake pressure correction, the main injection timing ainjm is gently changed into a small amount in comparison with the changing amount of the required value ainjmtrg accompanying the combustion mode switching here.

In this embodiment, the pilot injection is interrupted when the above-mentioned gradual-change period expires and it becomes time t3 when the command values of the above-mentioned respective controlled variables of the injection system become required values in the low temperature lean combustion mode. This is derived from the following reasons.

Although the pilot injection in the normal combustion mode is performed for the purpose of reducing combustion noise, combustion noise almost ceases to change regardless of the presence of implementation of the pilot injection in the low temperature lean combustion mode where the combustion becomes inactive. Therefore, when it is after shifting to the low temperature lean combustion mode thoroughly, it is possible to interrupt the pilot injection without almost affecting it.

In this embodiment, a pilot injection amount and the pilot interval are kept at the values just before the switching of the required combustion mode mdcb in the above-mentioned delay period and gradual-change period (time t1 to time t3). The pilot injection amount and pilot interval are gradually decreased after the expiration of the gradual-change period (time t3), and the pilot injection is interrupted. According to the main injection amount command value qfinm increasing in connection with such interruption of the pilot injection, the torque correction amount qdm is increased at time t3. The processing which relates to such interruption of the pilot injection is similarly performed also at the time of switching from the normal injection mode to the low temperature rich combustion mode and at the time of switching from the temperature rising multi-injection mode to the low temperature lean/rich combustion mode.

In the example of this figure, at subsequent time t4, a switching request of the combustion mode from the low temperature lean combustion mode to the normal combustion mode is performed, and the value of the required combustion mode mdcb is updated from 4 to 1 this time. At time t4, the required values of the air-fuel ratio and intake air amount are increased so that the required EGR rate may be decreased from the high EGR rate in the low temperature lean combustion mode to the comparatively low EGR rate in the normal combustion mode.

The reduction of the requiring EGR rate at this time can be quickly performed in comparison with the case where it is increased. This is because it is possible to reduce the EGR rate comparatively quickly by increasing the degree of opening of the intake throttle valve and decreasing the degree of opening of the EGR valve although large response delay occurs for the increase of the EGR rate due to the gas flow delay of air and EGR gas in the intake air passage 12 and EGR passage 33 even if the degree of opening of the intake throttle valve is decreased and the degree of opening of the EGR valve is increased.

Therefore, in regard to the combustion mode switching at this time, it is desirable to shorten the delay period and gradual-change period, or to enlarge the gradual-change coefficient mtc, that is, to lessen the gradual-change extents of the controlled variables of the injection system in comparison with the above-mentioned switching to the low temperature lean combustion mode from the normal combustion mode. In this embodiment, at the time of the combustion mode switching at this time, the delay counter cdly is set at zero and the delay period is set at zero. Thus, in this embodiment, the map value of the delay counter calculation map corresponding to the switching to the normal combustion mode from the low temperature lean combustion mode used in the delay/gradual-change counter calculation logic is uniformly set at zero regardless of the engine speed ne.

Therefore, in the example of this figure, the value of the combustion mode mdcbd for injection is also updated from 4 to 1 concurrently with the required combustion mode mdcb at time t4.

In this way, when the combustion mode mdcbd for injection is updated, the gradual-change counter csm is set at a value corresponding to the switching to the normal combustion mode from the low temperature lean combustion mode, and the gradual-change coefficient mtc is also updated to a value corresponding to the same switching. The value of the gradual-change counter csm set at this time is made a small value in comparison with the value set at the time of the switching to the low temperature lean combustion mode from the above-mentioned normal combustion mode. The value of the gradual-change coefficient mtc updated at this time is made a value near 1 in comparison with the value at the time of the above-mentioned switching to the low temperature lean combustion mode from the normal combustion mode.

Furthermore, at time t4, the required values pctrg, ainjmtrg, tqdm, tqdi, and tqdp of the above-mentioned respective controlled variables of the injection system, are changed into the values in the normal combustion mode. After that, these controlled variables of the injection system are gradually changed towards the required values changed here at the gradual-change ratio according to the gradual-change coefficient mtc updated. The gradual-change of each controlled variable of the injection system at this time is performed at a small gradual-change ratio according to the setting of the gradual-change coefficient mtc, and approaches the required values more quickly, in comparison with the time of the above-mentioned switching to the low-temperature lean combustion mode from the normal combustion mode.

At this time, the pilot injection is resumed from time t4 because of the reason mentioned above so that the switching of its presence may be made in the low temperature lean combustion mode.

At time t5, when the gradual-change counter csm is decremented to zero and the value of the gradual-change coefficient mtc is set at 1, each controlled variable of the injection system becomes a required value in the normal combustion mode, and switching of the combustion mode is completed.

Combustion mode switching between the normal combustion mode and the low temperature rich combustion mode in this embodiment only differs in the setting of the delay counter cdly, the gradual-change counter csm, and the gradual-change coefficient mtc a little, and is performed in almost the same manner as the combustion mode switching between the normal combustion modes and low temperature lean combustion modes which are explained above.

At the time of the combustion mode switching between the low temperature lean combustion mode and low temperature rich combustion mode, since the changing amounts of the controlled variables of the inlet system and the EGR system are small in comparison with those in the combustion mode switching between the normal combustion and low temperature combustion, the above-mentioned delay period and the gradual-change period are made shorter, and the gradual-change ratio of the controlled variables of the injection system in the gradual-change period is made smaller. Thus, in this case, the combustion mode switching is performed with setting the delay counter cdly and gradual-change counter csm at smaller values, and setting the gradual-change coefficient mtc at a larger value, respectively.

At the time of the combustion mode switching between the normal combustion mode and the temperature rising multi-injection mode, the combustion mode is switched without providing the above delay periods and gradual-change period since there is no change in the controlled variables of the inlet system and EGR system as mentioned above. Thus, in this case, with setting the values of the delay counter cdly and gradual-change counter csm at zero and setting the value of the gradual-change coefficient mtc at 1 respectively, the combustion mode switching is performed.

This embodiment has the following advantages.

(1) By absorbing the abrupt torque change before and after the combustion mode switching in the correction of the main injection amount command value qfinm by the torque correction amount qdm, the waviness correction amount qdi, and the cylinder internal pressure correction amount qdp and gradual changing these correction amounts of injection amounts at the time of the combustion mode switching, the main injection amount command value qfinm is made to undergo a transition with corresponding to the response delay of the controlled variables of the inlet system and EGR system. Owing to this, it is possible to make the required injection amount qfin an index value of the universal engine load which does not depend on a combustion mode, and it is possible to decrease torque fluctuations at the time of switching of the combustion mode without affecting other control apparatuss.

(2) The change extent (gradual-change coefficient mtc) of the torque correction amount qdm, the waviness correction amount qdi, and the cylinder internal pressure correction amount qdp for combustion mode switching is made uniform. Hence, the injection amount command value during the combustion mode switching is changed further smoothly, and hence, it is possible to further suppress the torque fluctuations at the time of the combustion mode switching.

(3) Furthermore, the main injection timing ainjm and the target injection pressure pc at the time of the combustion mode switching are also gradually changed with the gradual-change extent (gradual-change coefficient mtc) uniform with the above-mentioned respective correction amounts of injection amounts, qdm, qdi, and qdp. Therefore, it is possible to make the fuel injection timing, the injection amount, and the injection pressure undergo a transition with synchronizing them during the combustion mode switching, and hence, it is possible to more suitably suppress the torque fluctuations at the time of the combustion mode switching.

(4) The periods and the gradual-change extent which gradually change each controlled variable of the injection system are changed according to the combination of combustion modes before and after the switching, and the engine speed ne. Therefore, it is possible to perform the gradual-change processing of suitable controlled variables of the injection system with corresponding to the length and time of response delay of controlled variables of the inlet system and EGR system which change according to the above-mentioned combination and the engine speed ne. Hence, it is possible to exactly suppress the torque fluctuations at the time of the combustion mode switching.

(5) At the time of the combustion mode switching between the low temperature (lean/rich) combustion mode and normal combustion mode (including the temperature rising multi-injection mode), the presence of implementation of the pilot injection is switched during the low temperature combustion mode where the presence of the pilot injection hardly affects combustion noise. Therefore, it is possible to suitably suppress malfunctions such as deterioration of the combustion noise accompanying the interruption and resumption of the pilot injection.

It should be apparent to those skilled in the art that the present invention may be embodied in many other specific forms without departing from the spirit or scope of the invention. Particularly, it should be understood that the invention may be embodied in the following forms.

In regard to the detail of setting of respective values in combustion mode switching processing such as the setting of the delay counter cdly, the gradual-change counter csm, and the gradual-change coefficient mtc, and modification of required values of respective controlled variables at the time of combustion mode switching, it may be also changed suitably according to the characteristics of a diesel engine, to which the embodiment is applied, without limiting to the setting exemplified by the above-mentioned embodiment.

In the above-mentioned embodiment, although the delay counter cdly, the gradual-change counter csm, and the gradual-change coefficient mtc are made to be calculated by using a calculation map which is based on the engine speed ne prepared for each combination of combustion modes before and after switching, those calculations may be also changed suitably without limiting to this. For example, each of the delay counter cdly, the gradual-change counter csm, and the gradual-change coefficient mtc may be also calculated by using a calculation function which is based on the engine speed ne beforehand prepared for every combination of the combustion modes before and after the above-mentioned switching.

When the change of the response delay of the controlled variables of the inlet system and EGR system by the combination of the combustion modes before and after the switching or by the engine speed ne is small to the extent which can fully be disregarded, the delay counter cdly, the gradual-change counter csm, and the gradual-change coefficient mtc may also be changed according to only one of them, or may be set uniformly. When response delay of controlled variables of the inlet system and the EGR system changes to the extent that cannot be disregarded by a component other than the above-mentioned combination and the engine speed ne, the delay counter cdly, the gradual-change counter csm, and the gradual-change coefficient mtc may be also changed according to the component.

Although a gradual-change processing is performed with the common gradual-change coefficient mtc for the target injection pressure pc, the main injection timing ainjm, and the correction amount of each injection amount and the gradual-change extent in the above-mentioned gradual-change period is made uniform in the above-mentioned embodiment, gradual-change extents of those may be also changed independently. For example, when there is a great difference between responses of these respective controlled variables of the injection system, or sensitivities to the change of controlled variables of the inlet system and EGR system, it may be possible to more suitably suppress the torque fluctuations at the time of the combustion mode switching by changing the gradual-change extent for every controlled variable of the injection system. As for a gradual-change period, similarly, the period may be changed for every controlled variable of the injection system.

The calculation of a correction amount of each injection amount of the torque correction amount qdm, the waviness correction amount qdi, and the cylinder internal pressure correction amount qdp may be also changed suitably without limiting to the calculations exemplified in the above-mentioned embodiment. For example, the waviness correction amount qdi may be calculated on the basis of a pilot injection amount and a pilot interval, or the cylinder internal pressure correction amount qdp may be also calculated according to an actual measurement of cylinder internal pressure at the time of the main injection, or an estimate of cylinder internal pressure etc. at the time of the main injection which is calculated from the main injection timing ainjm, the intake air amount. In short, when required values are changed according to the switching of the combustion mode, it is possible to suitably suppress the torque fluctuations at the time of combustion mode switching by the application of the gradual-change processing which is similar or conforms to that in the above-mentioned embodiment.

At the time of calculating the injection amounts of auxiliary injections such as pilot injection and after injection, correction may be performed with a correction amount of an injection amount which is the same as at least one of the torque correction amount qdm, the waviness correction amount qdi, and the cylinder internal pressure correction amount qdp.

When the change of the injection rate of the injector 40 accompanying the implementation status of two or more times of injections or the change of fuel injection timing is small to the extent which can be disregarded, either or both of the waviness correction amount qdi and the cylinder internal pressure correction amount qdp may be also omitted.

The gradual-change processing of the above-mentioned respective controlled variables of the injection system may be performed by a method other than the weighted mean processing (annealing) exemplified in the above-mentioned embodiment. In short, when each controlled variable of the injection system is gradually changed in the above-mentioned gradual-change period from the required value in the combustion mode before switching to the required value in the combustion mode after switching, arbitrary gradual-change processing can be adopted.

The present invention is applicable also to a diesel engine which switches a combustion mode in the combination of combustion modes other than the combination of four combustion modes exemplified in the above-mentioned embodiment.

Without limiting to the structure of the diesel engine 10 which is exemplified in the above-mentioned embodiment, the present invention is applicable to a diesel engine so long as the diesel engine performs switching of combustion modes.

The present examples and embodiments are to be considered as illustrative and not restrictive and the invention is not to be limited to the details given herein, but may be modified within the scope of the appended claims.

**Claims**

1. A fuel injection control apparatus (50) applied to a diesel engine (10) that is capable of switching combustion modes (1-5) according to a driving condition (ne, accp), wherein the apparatus (50) computes a required injection amount (qfin) based on an engine speed (ne) and a load (accp) acting on the engine (10), and corrects the computed required injection amount (qfin) using a torque correction amount (qdm) that represents a difference in the amount of injection for generating a required torque of the engine (10) between different combustion modes (1-5), thereby determining an injection amount command value (qfinm), wherein, when switching the combustion modes (1-5), the apparatus (50) gradually changes the torque correction amount (qdm) from a value required in the combustion mode (1-5) before switching to a value required for the combustion mode (1-5) after switching,
the apparatus (50) being **characterized in that** the apparatus (50) changes the extent (mtc) of the gradual change of the torque correction amount (qdm) according to the combination of the combustion mode (1-5) before switching and the combustion mode (1-5) after switching.

2. The apparatus (50) according to claim 1, **characterized in that**, when determining the injection amount command value (qfinm), the apparatus (50) corrects the required injection amount (qfin) using a waviness correction amount (qdi), which represents a changed portion of an injection rate caused by a fluctuation of a fuel pressure due to the execution of an auxiliary injection, and a cylinder internal pressure correction amount (qdp), which represents a changed portion of the injection rate caused by a change of a cylinder internal pressure at the time of an injection, the change of the cylinder internal pressure accompanying a change of injection timing, and wherein the apparatus (50) gradually changes the waviness correction amount (qdi) and the cylinder internal pressure correction amount (qdp) from values required in the combustion mode (1-5) before switching to values required for the combustion mode (1-5) after switching at the same time as gradually changing the torque correction amount (qdm) when switching the combustion modes (1-5).

3. The apparatus (50) according to claim 2, **characterized in that**, when switching the combustion modes (1-5), the extent (mtc) of gradual changes of the torque correction amount (qdm), the waviness correction amount (qdi), and the cylinder internal pressure correction amount (qdp) are the same.

4. The apparatus (50) according to any one of claims 1 to 3, **characterized in that** the apparatus (50) gradually changes the injection timing and a target injection pressure from values required in the combustion mode (1-5) before switching to values required for the combustion mode (1-5) after switching at the same time as gradually changing the torque correction amount (qdm) when switching the combustion modes (1-5).

5. The apparatus (50) according to any one of claims 1 to 4, **characterized in that** the apparatus (50) changes the extent (mtc) of the gradual change of the torque correction amount (qdm) according to the engine speed (ne).

6. The apparatus (50) according to any one of claims 1 to 5, **characterized in that** the apparatus (50) changes a period (ainjm) for gradually changing the torque correction amount (qdm) according to the combination of the combustion mode (1-5) before switching and the combustion mode (1-5) after switching.

7. The apparatus (50) according to any one of claims 1 to 6, **characterized in that** the apparatus (50) changes the period (ainjm) for gradually changing the torque correction amount (qdm) according to the engine speed (ne).

8. The apparatus (50) according to any one of claims 1 to 7, **characterized in that** the combustion modes (1-5) include a normal combustion mode (1), in which combustion is performed with setting an exhaust gas recirculation rate lower than an exhaust gas recirculation rate at which the amount of smoke emission becomes a peak, and a low temperature combustion mode (4), in which combustion is performed with setting the exhaust gas recirculation rate higher than the exhaust gas recirculation rate at which the amount of smoke emission becomes a peak.

9. A method for controlling a fuel injection control apparatus (50) applied to a diesel engine (10) that is capable of switching combustion mode (1-5) according to a driving condition (ne, accp), the method being comprising:

   computing a required injection amount (qfin) based on an engine speed (ne) and a load (accp) acting on the engine (10);
   correcting the required injection amount (qfin) using a torque correction amount (qdm) that represents a difference in the amount of injection required for generating a required torque between different combustion modes (1-5), thereby determining an injection amount command value (qfinm);
   gradually changing the torque correction amount (qdm) from a value required in the combustion mode (1-5) before switching to a value required for the combustion mode (1-5) after switching when the combustion mode (1-5) is switched,
   the method being **characterized by**:

   changing the extent (mtc) of the gradual change of the torque correction amount (qdm) according to the combination of the combustion mode (1-5) before switching and the combustion mode (1-5) after switching.

**EP 1 515 033 B1**

**Patentansprüche**

1.  Kraftstoffeinspritz-Steuerungsvorrichtung (50), die auf einen Dieselmotor (10) angewendet wird, der in der Lage ist, Verbrennungsmodi (1-5) entsprechend einem Antriebszustand (ne, accp) zu schalten, wobei die Vorrichtung (50) eine Soll-Einspritzmenge (qfin) basierend auf einer Motordrehzahl (ne) und einer Last (accp), die auf den Motor (10) einwirkt, berechnet, und die berechnete Soll-Einspritzmenge (qfin) unter Verwendung eines Drehmoment-Korrekturbetrags (qdm) korrigiert, der eine Verschiedenheit der Einspritzmenge zum Erzeugen eines Soll-Drehmoments des Motors (10) zwischen unterschiedlichen Verbrennungsmodi (1-5) darstellt, wodurch ein Einspritzmengen-Befehlswert (qfinm) bestimmt wird, wobei, beim Schalten der Verbrennungsmodi (1-5), die Vorrichtung (50) den Drehmoment-Korrekturbetrag (qdm) von einem Wert, der in dem Verbrennungsmodus (1-5) vor dem Schalten erforderlich ist, allmählich auf einen Wert verändert, der für den Verbrennungsmodus (1-5) nach dem Schalten erforderlich ist,
    wobei die Vorrichtung (50) **dadurch gekennzeichnet ist, dass** die Vorrichtung (50) das Ausmaß (mtc) der allmählichen Veränderung des Drehmoment-Korrekturbetrags (qdm) entsprechend der Kombination aus dem Verbrennungsmodus (1-5) vor dem Schalten und dem Verbrennungsmodus (1-5) nach dem Schalten verändert.

2.  Vorrichtung (50) nach Anspruch 1, **dadurch gekennzeichnet, dass**, beim Bestimmen des Einspritzmengen-Befehlswerts (qfinm), die Vorrichtung (50) die Soll-Einspritzmenge (qfin) unter Verwendung eines Welligkeitskorrekturbetrags (qdi), der einen veränderten Anteil einer Einspritzrate darstellt, der durch eine Schwankung eines Kraftstoffdrucks aufgrund der Ausführung einer Hilfseinspritzung verursacht wird, und eines Zylinderinnendruck-Korrekturbetrags (qdp) korrigiert, der einen veränderten Anteil der Einspritzrate darstellt, der durch eine Veränderung eines Zylinderinnendrucks zum Zeitpunkt einer Einspritzung verursacht wird, wobei die Veränderung des Zylinderinnendrucks mit einer Veränderung des Einspritzzeitpunkts einhergeht, und wobei die Vorrichtung (50) den Welligkeitskorrekturbetrag (qdi) und den Zylinderinnendruck-Korrekturbetrag (qdp) von Werten, die in dem Verbrennungsmodus (1-5) vor dem Schalten erforderlich sind, allmählich auf Werte, die für den Verbrennungsmodus (1-5) nach dem Schalten erforderlich sind, zeitgleich mit der allmählichen Veränderung des Drehmoment-Korrekturbetrags (qdm) verändert, wenn die Verbrennungsmodi (1-5) geschaltet werden.

3.  Vorrichtung (50) nach Anspruch 2, **dadurch gekennzeichnet, dass**, beim Schalten der Verbrennungsmodi (1-5), das Ausmaß (mtc) der allmählichen Veränderungen des Drehmoment-Korrekturbetrags (qdm), des Welligkeits-Korrekturbetrags (qdi) und des Zylinderinnendruck-Korrekturbetrags (dqp) identisch ist.

4.  Vorrichtung (50) nach einem der Ansprüche 1 bis 3, **dadurch gekennzeichnet, dass** die Vorrichtung (50) den Einspritzzeitpunkt und einen Soll-Einspritzdruck von Werten, die in dem Verbrennungsmodus (1-5) vor dem Schalten erforderlich sind, allmählich auf Werte, die für den Verbrennungsmodus (1-5) nach dem Schalten erforderlich sind, zeitgleich mit der allmählichen Veränderung des Drehmoment-Korrekturbetrags (qdm) verändert, wenn die Verbrennungsmodi (1-5) geschaltet werden.

5.  Vorrichtung (50) nach einem der Ansprüche 1 bis 3, **dadurch gekennzeichnet, dass** die Vorrichtung (50) das Ausmaß (mtc) der allmählichen Veränderung des Drehmoment-Korrekturbetrags (qdm) entsprechend der Motordrehzahl (ne) verändert.

6.  Vorrichtung (50) nach einem der Ansprüche 1 bis 5, **dadurch gekennzeichnet, dass** die Vorrichtung (50) eine Zeitspanne (ainjm) zum allmählichen Verändern des Drehmoment-Korrekturbetrags (qdm) entsprechend der Kombination aus dem Verbrennungsmodus (1-5) vor dem Schalten und dem Verbrennungsmodus (1-5) nach dem Schalten verändert.

7.  Vorrichtung (50) nach einem der Ansprüche 1 bis 6, **dadurch gekennzeichnet, dass** die Vorrichtung (50) die Zeitspanne (ainjm) zum allmählichen Verändern des Drehmoment-Korrekturbetrags (qdm) entsprechend der Motordrehzahl (ne) verändert.

8.  Vorrichtung (50) nach einem der Ansprüche 1 bis 7, **dadurch gekennzeichnet, dass** die Verbrennungsmodi (1-5) einen normalen Verbrennungsmodus (1), in dem die Verbrennung bei Einstellung einer Abgasrückführungsrate auf einen Wert ausgeführt wird, der geringer ist als eine Abgasrückführungsrate, bei der die Menge der Rauchemission einen Spitzenwert erreicht, und einen Niedertemperatur-Verbrennungsmodus (4) beinhalten, in dem die Verbrennung bei Einstellung der Abgasrückführungsrate auf einen Wert ausgeführt wird, der höher ist als die Abgasrückführungsrate, bei der die Rauchemission einen Spitzenwert erreicht.

16

9. Verfahren zum Steuern einer Kraftstoffeinspritz-Steuerungsvorrichtung (50), das auf einen Dieselmotor (10) angewendet wird, der in der Lage ist, Verbrennungsmodi (1-5) entsprechend einem Antriebszustand (ne, accp) zu schalten, wobei das Verfahren folgende Schritte beinhaltet:

Berechnen einer Soll-Einspritzmenge (qfin) basierend auf einer Motordrehzahl (ne) und einer Last (accp), die auf den Motor (10) einwirkt,
Korrigieren der Soll-Einspritzmenge (qfin) unter Verwendung eines Drehmoment-Korrekturbetrags (qdm), der eine Verschiedenheit der Einspritzmenge zum Erzeugen eines Soll-Drehmoments zwischen unterschiedlichen Verbrennungsmodi (1-5) darstellt, wodurch ein Einspritzmengen-Befehlswert (qfinm) bestimmt wird;
allmähliches Verändern des Drehmoment-Korrekturbetrags (qdm) von einem Wert, der in dem Verbrennungsmodus (1-5) vor dem Schalten erforderlich ist, auf einen Wert, der der für den Verbrennungsmodus (1-5) nach dem Schalten erforderlich ist, wenn der Verbrennungsmodus (1-5) geschaltet wird,
wobei das Verfahren **gekennzeichnet ist durch**:

Verändern des Ausmaßes (mtc) der allmählichen Veränderung des Drehmoment-Korrekturbetrags (qdm) entsprechend der Kombination aus dem Verbrennungsmodus (1-5) vor dem Schalten und dem Verbrennungsmodus (1-5) nach dem Schalten.

## Revendications

1. Appareil de commande d'injection de carburant (50) appliqué à un moteur diesel (10) qui est capable de commuter des modes de combustion (1-5) selon une condition de conduite (ne, accp), où l'appareil (50) calcule une quantité d'injection requise (qfin) sur la base d'une vitesse de moteur (ne) et d'une charge (accp) agissant sur le moteur (10), et corrige la quantité d'injection requise calculée (qfin) en utilisant une quantité de correction de couple (qdm) qui représente une différence dans la quantité d'injection pour générer un couple requis du moteur (10) entre différents modes de combustion (1-5), déterminant ainsi une valeur de commande de quantité d'injection (qfinm), où, lors de la commutation des modes de combustion (1-5), l'appareil (50) change graduellement la quantité de correction de couple (qdm) d'une valeur requise dans le mode de combustion (1-5) avant commutation en une valeur requise pour le mode de combustion (1-5) après commutation,
l'appareil (50) étant **caractérisé en ce que** l'appareil (50) change l'étendue (mtc) du changement graduel de la quantité de correction de couple (qdm) selon la combinaison du mode de combustion (1-5) avant commutation et du mode de combustion (1-5) après commutation.

2. Appareil (50) selon la revendication 1, **caractérisé en ce que**, lors de la détermination de la valeur de commande de quantité d'injection (qfinm), l'appareil (50) corrige la quantité d'injection requise (qfin) en utilisant une quantité de correction d'ondulation (qdi), qui représente une partie changée d'un taux d'injection provoquée par une fluctuation d'une pression de carburant due à l'exécution d'une injection auxiliaire, et une quantité de correction de pression interne de cylindre (qdp), qui représente une partie changée du taux d'injection provoquée par un changement d'une pression interne de cylindre au moment d'une injection, le changement de la pression interne du cylindre accompagnant un changement de synchronisation d'injection, et où l'appareil (50) change graduellement la quantité de correction d'ondulation (qdi) et la quantité de correction de pression interne du cylindre (qdp) de valeurs requises dans le mode de combustion (1-5) avant commutation en valeurs requises pour le mode de combustion (1-5) après commutation en même temps qu'il change graduellement la quantité de correction de couple (qdm) lors de la commutation des modes de combustion (1-5).

3. Appareil (50) selon la revendication 2, **caractérisé en ce que**, lors de la commutation des modes de combustion (1-5), l'étendue (mtc) de changements graduels de la quantité de correction de couple (qdm), la quantité de correction d'ondulation (qdi), et la quantité de correction de pression interne du cylindre (qdp) sont les mêmes.

4. Appareil (50) selon l'une quelconque des revendications 1 à 3, **caractérisé en ce que** l'appareil (50) change graduellement le calage temporel d'injection et une pression d'injection cible de valeurs requises dans le mode de combustion (1-5) après commutation en valeurs requises pour le mode de combustion (1-5) après commutation en même temps qu'il change graduellement la quantité de correction de couple (qdm) lors de la commutation des modes de combustion (1-5).

5. Appareil (50) selon l'une quelconque des revendications 1 à 4, **caractérisé en ce que** l'appareil (50) change l'étendue (mtc) du changement graduel de la quantité de correction de couple (qdm) selon la vitesse du moteur (ne).

**6.** Appareil (50) selon l'une quelconque des revendications 1 à 5, **caractérisé en ce que** l'appareil (50) change une période (ainjm) pour changer graduellement la quantité de correction de couple (qdm) selon la combinaison du mode de combustion (1-5) avant commutation et du mode de combustion (1-5) après commutation.

**7.** Appareil (50) selon l'une quelconque des revendications 1 à 6, **caractérisé en ce que** l'appareil (50) change la période (ainjm) pour changer graduellement la quantité de correction de couple (qdm) selon la vitesse du moteur (ne).

**8.** Appareil (50) selon l'une quelconque des revendications 1 à 7, **caractérisé en ce que** les modes de combustion (1-5) comportent un mode de combustion normal (1), où la combustion est effectuée en établissant un taux de recirculation de gaz d'échappement inférieur à un taux de recirculation de gaz d'échappement auquel la quantité de dégagement de fumée atteint un pic, et un mode de combustion à faible température (4), où une combustion est effectuée en établissant le taux de recirculation de gaz d'échappement de sorte à être plus élevé que le taux de recirculation de gaz d'échappement auquel la quantité de dégagement de fumée atteint un pic.

**9.** Procédé pour commander un appareil de commande d'injection de carburant (50) appliqué à un moteur diesel (10) qui est capable de commuter un mode de combustion (1-5) selon une condition de conduite (ne, accp), le procédé comprenant le fait de :

calculer une quantité d'injection requise (qfin) sur la base d'une vitesse de moteur (ne) et une charge (accp) agissant sur le moteur (10) ;
corriger la quantité d'injection requise (afin) en utilisant une quantité de correction de couple (qdm) qui représente une différence dans la quantité d'injection requise pour générer un couple requis entre différents modes de combustion (1-5), déterminant ainsi une valeur de commande de quantité d'injection (qfinm) ;
changer graduellement la quantité de correction de couple (qdm) d'une valeur requise dans le mode de combustion (1-5) avant commutation en une valeur requise pour le mode de combustion (1-5) après commutation lorsque le mode de combustion (1-5) est commuté,
le procédé étant **caractérisé par** le fait de :

changer l'étendue (mtc) du changement graduel de la quantité de correction de couple (qdm) selon la combinaison du mode de combustion (1-5) avant commutation et du mode de combustion (1-5) après commutation.

# Fig. 1

# Fig. 2

Required Torque Correction Amount Calculation Map

For Low Temperature Rich Combustion Mode

For Low Temperature Lean Combustion Mode

For Temperature Rising Multi-Injection Mode

For Normal Combustion Mode

| | | ne | | | |
|---|---|---|---|---|---|
| | | NE1 | NE2 | $\cdots\cdots$ | NEn |
| qfin | QFIN1 | QDM11 | QDM12 | $\cdots\cdots$ | QDM1n |
| | QFIN2 | QDM21 | | | $\vdots$ |
| | $\vdots$ | $\vdots$ | | | $\vdots$ |
| | QFINm | QDMm1 | $\cdots\cdots\cdots\cdots\cdots$ | | QDMmn |

# Fig. 3

Normal Combustion Mode

Low Temperature Lean Combustion Mode

$(qdi=0)$

Injection Amount

qdp

qdi

qdm

qfin

qdp

qdm

qfin

# Fig. 4

Flow of Processing at the Time of Combustion Mode Switching

```
       ┌────────────────────────────┐
       │  Receive Combustion Mode   │
       │    Switching Request       │ ～ S10
       │    (Switching Start)       │
       └────────────┬───────────────┘
                    ↓
       ┌────────────────────────────┐
       │        Update mdcb         │ ～ S20
       └────────────┬───────────────┘
                    ↓
┌──────────────────────────────────────────────────┐
│ Change Target EGR Rate into Required Values in     │
│ Combustion Mode after Switching (Change of Target  │ ～ S30
│ Degree of Opening of Throttle Valve and Target     │
│ Degree of Opening of EGR Valve)                    │
└────────────────────┬───────────────────────────────┘
                     ↓
       ┌────────────────────────────┐
       │   Calculate cdly and csm   │ ～ S40
       └────────────┬───────────────┘
                    ↓ ←──────────────────────────────┐
       S50 ～  ╱────────────╲        NO               │
            ╱  cdly = 0 ?   ╲──────────────┐    S55   │
            ╲               ╱               ↓    ╱     │
              ╲───────────╱         ┌───────────────┐ │
                  │ YES             │ cdly ← cdly─1 │─┘
                  ↓                 └───────────────┘
       ┌────────────────────────────┐
       │       Update mdcbd         │ ～ S60
       └────────────┬───────────────┘
                    ↓
┌──────────────────────────────────────────────────┐
│ Change Required Values of qdm, qdi, qdp, pc, and   │ ～ S70
│ ainjm into Values in Combustion Mode after Switching│
└────────────────────┬───────────────────────────────┘
                     ↓
       ┌────────────────────────────┐
       │         Update mtc         │ ～ S80
       └────────────┬───────────────┘
                    ↓
┌──────────────────────────────────────────────────┐
│ Start GRADUAL Change Processing of qdm, qdi, qdp,  │ ～ S90
│ pc, and ainjm                                       │
└────────────────────┬───────────────────────────────┘
                     ↓ ←──────────────────────────────┐
       S100 ～  ╱───────────╲       NO                 │
             ╱  csm = 0 ?   ╲──────────────┐   S105    │
             ╲              ╱               ↓    ╱      │
               ╲──────────╱          ┌───────────────┐ │
                  │ YES              │ csm ← csm─1   │─┘
                  ↓                  └───────────────┘
       ┌────────────────────────────┐
       │ End Gradual Change Processing│ ～ S110
       └────────────┬───────────────┘
                    ↓
       ┌────────────────────────────┐
       │   Completion of Combustion │ ～ S120
       │       Mode Switching       │
       └────────────────────────────┘
```

# Fig. 5

```
┌─────────────────────────────────────────────┐
( Delay and Gradual Change COUNTER            )
( Calculation Routine  (S40)                   )
└─────────────────────────────────────────────┘
                     │
                     ▼
┌─────────────────────────────────────────────┐
│  Select cdly and csm Calculation Maps       │∼ S300
└─────────────────────────────────────────────┘
                     │
                     ▼
┌─────────────────────────────────────────────┐
│         Calculate cdly and csm              │∼ S310
└─────────────────────────────────────────────┘
                     │
                     ▼
        ( End of Processing )
```

# Fig. 6

(A) Delay Counter Calculation Map

cdcb 5 → 4
cdcb 5 → 1 or 3
cdcb 1 or 3 → 5
cdcb 1 or 3 → 4

| ne [rpm] | 700 | 1000 | 1500 | 2000 | 2500 |
|----------|-----|------|------|------|------|
| cdly     | CD1 | CD2  | CD3  | CD4  | CD5  |

(B) Gradual Change Counter Calculation Map

cdcb 5 → 4
cdcb 5 → 1 or 3
cdcb 1 or 3 → 5
cdcb 1 or 3 → 4

| ne [rpm] | 700 | 1000 | 1500 | 2000 | 2500 |
|----------|-----|------|------|------|------|
| csm      | CS1 | CS2  | CS3  | CS4  | CS5  |

# Fig. 7

```
┌─────────────────────────────────────┐
│  Gradual Change COEFFICIENT          │
│  Calculation Routine                 │
└─────────────────────────────────────┘
                    │
                    ▼              ~ S400
              ╱─────────────╲         YES              S410
             ╱   csm=0?      ╲──────────────┐           ╲
              ╲─────────────╱                ▼      ┌──────────────┐
                    │ NO                           │   mtc=1      │
                    ▼              ~ S420          └──────────────┘
              ╱─────────────╲         NO                   │
             ╱ Is mdcbd Updated? ╲────────────────────────┤
              ╲─────────────╱                              │
                    │ YES                                  │
         ┌─────────────────────────────────┐              │
         │ Select Gradual Change Coefficient│ ~ S430      │
         │ Calculation Map                  │             │
         └─────────────────────────────────┘             │
                    │                                     │
         ┌─────────────────────────────────┐             │
         │      Calculate mtc              │ ~ S440       │
         └─────────────────────────────────┘             │
                    │◄────────────────────────────────────┘
                    ▼
         ┌─────────────────────────┐
         │   End of Processing     │
         └─────────────────────────┘
```

# Fig. 8

Gradual Change Coefficient Calculation Map

cdcb 5 → 4

cdcb 5 → 1 or 3

cdcb 1 or 3 → 5

cdcb 1 or 3 → 4

| ne [rpm] | 700 | 1000 | 1500 | 2000 | 2500 |
|----------|------|------|------|------|------|
| mtc | MTC1 | MTC2 | MTC3 | MTC4 | MTC5 |

# Fig. 9

Injection Control COMMAND Value Calculation Routine

↓

| Calculate Required Values of pc, ainjm, qdm, qdi, AND qdp | ~ S500 |

↓

| X [i] ←X [i−1] × (1−mtc) +Xtrg×mtc | ~ S510 |

↓

End of Processing

# Fig. 10

(a) Required Value

(b) Command Value

mtc = 1.0

(0 < mtc ≦ 1.0)

Large

mtc

Small

# Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000064879 A